# EUROPEAN PATENT APPLICATION

(11) **EP 1 578 120 A2**
(43) Date of publication of application: **21.09.2005**
(21) Application number: 05102008.9
(22) Date of filing: 15.03.2005
(51) Int. Cl.: H04N 5/445

(54) **Method and apparatus for generating a program guide**

(30) Priority: 19.03.2004 US 804975
(71) Applicant: MICROSOFT CORPORATION, Redmond, WA 98052 (US)
(72) Inventor: Danker, Daniel, Redmond, WA 98052 (US)
(74) Representative: Grünecker, Kinkeldey, Stockmair & Schwanhäusser Anwaltssozietät

(57) **Abstract**

A client device receives a request to display a program guide. After identifying program schedule information, the client device generates a scrolling program guide and communicates the scrolling program guide to a display device. The program guide may contain the program schedule information as well as additional information targeted to a user of the client device.

## Description

### TECHNICAL FIELD

The systems and methods described herein relate to generating a program guide in a television environment.

### BACKGROUND

A client device in a television-based system can receive video and audio content from a program distributor in the form of broadcast programs, such as news programs, sitcoms, movies, sporting events, commercials, and any other type of television-based information. A client device includes, for example, a set-top box, a digital satellite receiver, a cable box, and a digital video recorder (DVR). Some client devices include a memory component that may store program schedule information, configuration information, viewer preferences, and the like.

Many broadcast services, such as cable services, offer a listing of what programs are being shown on each channel using a non-interactive scrolling program guide. The scrolling program guide automatically scrolls through available programs (e.g., scrolling through programs based on channel number or other parameter). Program guide information can be scrolled vertically, horizontally, or in any other manner. The scrolling program guide may be generated by equipment at a headend (or at another location) by the broadcast service and provided to the users via a particular channel. Thus, when a user tunes the client device to the particular channel, a scrolling program guide is displayed. This scrolling program guide generally requires the same bandwidth as any other analog video channel.

Other broadcast services, such as those services that utilize a set top box or similar device, offer an interactive program guide. In this situation, the client device downloads program schedule information that describes current and upcoming programs on all channels. This program schedule information is used by the client device to generate an interactive program guide that is activated, for example, through a menu system or pressing a "Guide" (or similar) button on a remote control device. The user navigates the interactive program guide using arrow buttons on the remote control device or other control functions. Thus, the interactive program guide requires the user to participate in an active experience with the television. For users that prefer a non-interactive scrolling program guide, this type of participation may not be desired. Additionally, using an interactive program guide may frustrate some users who are not familiar with interactive program guides.

### SUMMARY

The systems and methods described herein implement a program guide that offers a non-interactive (or passive) scrolling mode as well as an interactive mode. In a particular embodiment, a client device receives a request to display a program guide. Program schedule information is then identified and the client device generates a scrolling program guide. The scrolling program guide is communicated to a display device.

### BRIEF DESCRIPTION OF THE DRAWINGS

Similar reference numbers are used throughout the figures to reference like components and/or features.
Fig. 1 illustrates various components of an example system to implement a program guide.
Fig. 2 illustrates an example program guide containing program schedule information and additional information targeted to the viewer.
Fig. 3 is a flow diagram illustrating an embodiment of a procedure for implementing a program guide.
Fig. 4 is a flow diagram illustrating an embodiment of a procedure for obtaining additional information for display in a program guide.
Fig. 5 illustrates a television-based system that includes an example client device, which includes components to implement a program guide.
Fig. 6 illustrates an example system architecture in which a program guide can be implemented.

### DETAILED DESCRIPTION

The systems and methods described herein are capable of generating a passive program guide that offers a non-interactive scrolling mode as well as an interactive mode without requiring a dedicated broadcast channel for the non-interactive scrolling program guide. These systems and methods allow a user to transition from a passive scrolling program guide to an interactive program guide without requiring a dedicated broadcast channel for the scrolling program guide. Additionally, the systems and methods described herein can generate a program guide containing additional information that is targeted to a particular viewer.

Client devices of the type discussed herein range from clients with substantial memory and processing resources, such as television-enabled personal computers and television recorders equipped with hard-disks, to clients with limited memory and/or processing resources, such as traditional set-top boxes. Although particular examples of client devices are discussed herein, any client device can be used with the systems and methods described. As used herein, the term "user" may also be referred to as "viewer". As used herein, "programs" include news shows, sitcoms, comedies, movies, commercials, talk shows, sporting events, on-demand videos, content recorded to a local hard disk, and any other form of television-based entertainment and information.

Various examples discussed herein refer to a "headend". As used herein, "headend" or "head end" refers to any location from which data may be sent. Example headends include traditional broadcast facilities, data centers, network operations centers, locations where one or more servers are situated, and the like.

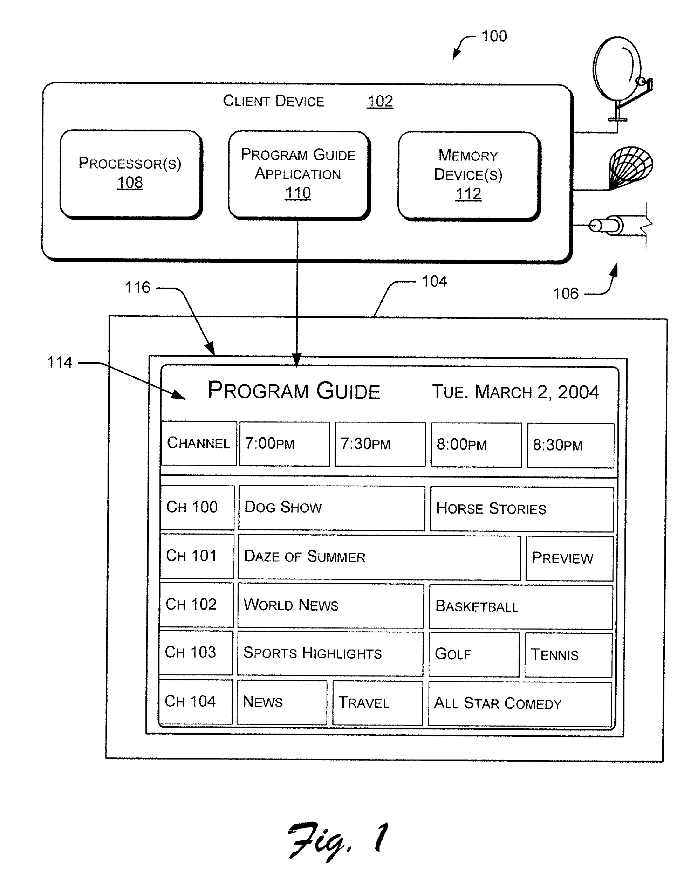

Fig. 1 illustrates various components of an example system 100 to implement a program guide. System 100 includes a client device 102 and a display device 104. Display device 104 includes, for example, a television, a computer monitor, a projector, and the like. Client device 102 receives broadcast content from various transmission media 106, such as satellite transmission, radio frequency transmission, cable transmission, and/or any number of other transmission media. Client device 102 receives the broadcast content from a headend in a television-based content distribution system, for example, that provides broadcast content and other information to multiple client devices.

In the example of Fig. 1, client device 102 includes one or more processors 108, a program guide application 110, and one or more memory devices 112. Processor(s) 108 include, for example, microprocessors and controllers, which process various instructions to control the operation of client device 102 and to communicate with other devices. Memory device(s) 112 may be implemented, for example, as a disk drive, a random access memory (RAM), a read-only memory (ROM), or a flash memory. Client device 102 may use memory device(s) 112 to store received programs, program schedule information, configuration data, user settings, data regarding previously viewed programs, and the like.

Program guide application 110 executes on processor(s) 108 and can be stored as computer-executable instructions in non-volatile memory (not shown) of client device 104. Program guide application 110 generates a program guide 114 that can be displayed in a display region 116 of display device 104. For example, program guide 114 may be displayed in the on-screen display (OSD) layer generated by client device 102. Alternatively, program guide 114 may be displayed in another layer generated by client device 102, such as the video layer. Although program guide application 110 is illustrated and described herein as a single application configured to generate program guide 114, program guide application 110 can be implemented as multiple component applications distributed such that each performs one or more functions.

Program guide 114 allows a viewer to see what programs are scheduled to be broadcast on particular channels at particular times. As discussed in greater detail below, program guide 114 may operate in a non-interactive scrolling mode or an interactive mode. When operating in the non-interactive scrolling mode, program guide 114 scrolls through some or all of the channels available to the viewer, displaying scheduled programs on those channels. The viewer can simply watch the program listings scroll on display device 104 without interacting with client device 102. When operating in the interactive mode, the information shown in program guide 114 is manipulated by pressing control buttons (e.g., arrow buttons) on a remote control device or other input device.

In the example of Fig. 1, program guide 114 displays program information associated with five channels (Ch 100 - Ch 104) during a two hour time period (7:00 pm - 9:00 pm) in a grid arrangement. When operating in the non-interactive scrolling mode, program guide 114 may continually scroll through all available channels. Alternatively, the information displayed in program guide 114 may be updated at regular intervals, such as every few seconds. For example, after displaying Ch 100 - Ch 104 for ten seconds, the information displayed in program guide 114 is updated to display program information associated with Ch 105 - Ch 109. In alternate embodiments, program guide 114 may display program information associated with any number of channels during any time period.

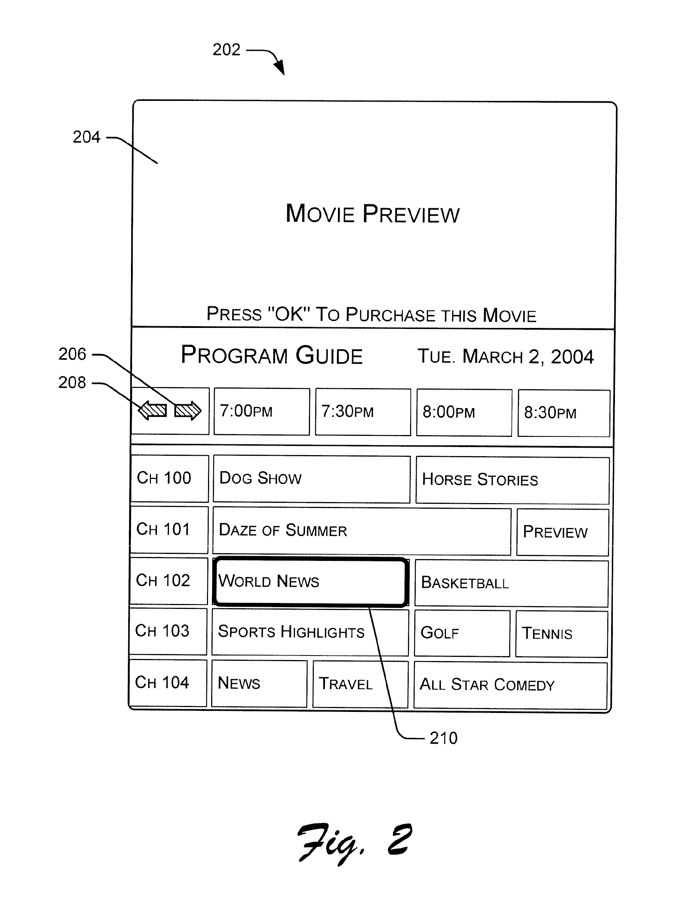

Fig. 2 illustrates an example program guide 202 containing program schedule information and additional information targeted to the viewer. Program guide 202 is generated by a client device, such as client device 102 discussed above with respect to Fig. 1. Program guide 202 displays program information similar to that shown in program guide 114 of Fig. 1. Additionally, program guide 202 includes an additional region 204, which may include advertisements, movie previews, pay-per-view previews, or other information. This region 204 may also be referred to as a "background region" or a "background portion". The information displayed in region 204 may be related to or independent from the program information displayed in the lower part of program guide 202. As discussed in greater detail below, region 204 may display information targeted to the viewer of program guide 202 (or the user of the client device). Background region 204 may be displayed when program guide 202 is operating in both an interactive mode and a non-interactive scrolling mode. Although program guide 202 is illustrated with background region 204 containing information targeted to the viewer, alternate embodiments of program guide 202 may omit background region 204.

Program guide 202 includes navigation controls 206 and 208 which allow a viewer to control the time period displayed in the program guide. For example, navigation control 206 changes the displayed time period to an earlier time period (e.g., one hour earlier) and navigation control 208 changes the displayed time period to a later time period (e.g., one hour later). Although not shown in Fig. 2, additional navigation controls may be provided in a program guide to control the range channels displayed in the program guide. For example, an arrow pointing up changes the displayed range of channels to a range of lower-numbered channels and an arrow pointing down changes the displayed range of channels to a range of higher-numbered channels.

Program guide 202 also includes a selectable control 210 that identifies a particular program. In the example of Fig. 2, selectable control 210 is positioned to identify "World News" on Ch 102 from 7:00pm - 8:00pm. At this point, activating a selection button will initiate the tuning and display of this program if the current time is between 7:00pm and 8:00pm. If the current time is earlier than 7:00pm then activating the selection button may set the program to be recorded or may perform some other function, such as a program reminder function. The selectable control 210 can be moved around program guide 202 using, for example, navigation buttons on a remote control device.

In a particular embodiment, program guide 202 includes an indicator (not shown) that, when selected, changes the interactive program guide to a non-interactive scrolling mode. For example, the indicator may be similar to arrows 206 and 208 that can be selected using selectable control 210. Alternatively, a user may activate the non-interactive scrolling mode by activating a button on a remote control, activating a button on a set top box, or otherwise activating a button or indicator on a device or in the program guide.

In other embodiments, program guide 202 may display different groupings of channels that are related to one another. These groupings of channels are not necessarily in sequential order or in numerical order. In essence, program guide 202 may be bound to different channels. For example, if channels 501-508 are HBO channels, program guide 202 can bind a "Now on HBO" guide to channel 500. Thus, when a viewer tunes to channel 500, program guide 202 displays available HBO channels. Other characteristics of program guide 202 are not changed, but the range of displayed channels is limited to HBO channels.

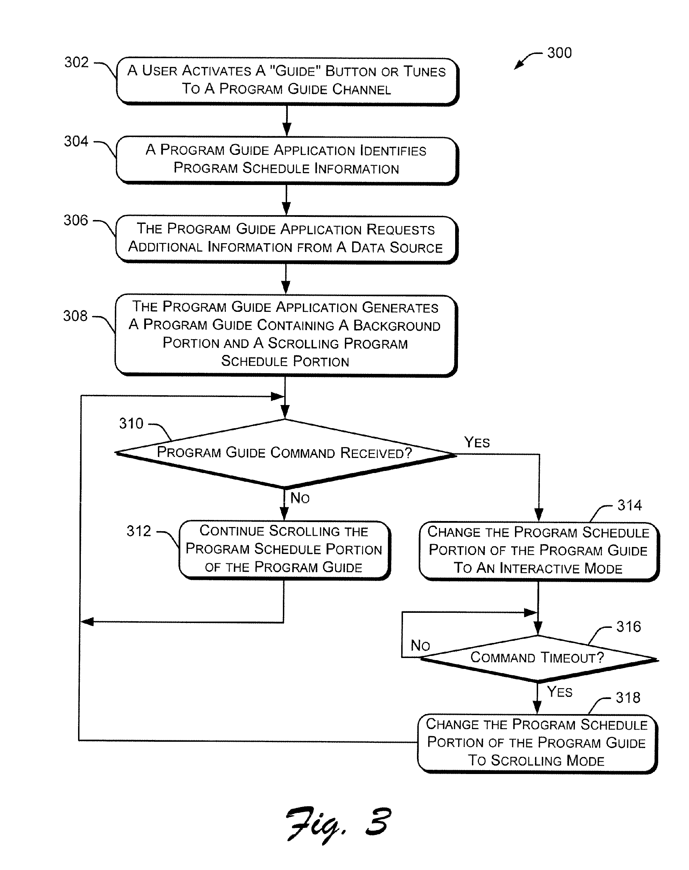

Fig. 3 is a flow diagram illustrating an embodiment of a procedure 300 for implementing a program guide. Initially, a user activates a "Guide" button (or other button) on a remote control device or tunes to a program guide channel (block 302). A program guide channel may be a virtual channel, such as channel 1, that displays a scrolling program guide. This virtual channel appears similar to a traditional scrolling program guide that is generated at a headend and transmitted to the a client device via a broadcast channel. However, using the systems and methods discussed herein, the scrolling program guide associated with the virtual channel is generated by the client device based on program schedule information downloaded or otherwise obtained regarding program schedules. The virtual channel may have an associated identifier (e.g., "What's On") and associated call letters (e.g., "WHATSON").

As procedure 300 continues, a program guide application identifies program schedule information (block 304). For example, the program schedule information may be downloaded from the headend or from any other data source. Alternatively, program schedule information may have been previously obtained by the client device and stored in a memory device contained in the client device. Example program schedule information includes a program title, a program date, a program time, a program duration, and a channel associated with the program. Additional program information may include a summary of the program, a program rating, and actors/actresses featured in the program.

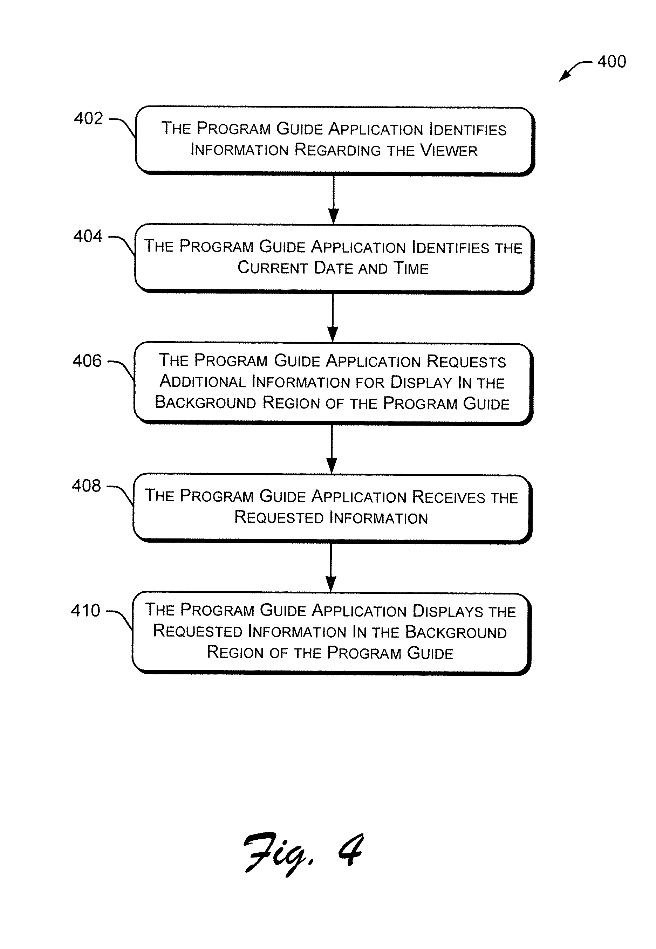

After identifying program schedule information, the program guide application requests additional information from a data source (block 306). This additional information may include advertisements, pay-per-view programs, movie trailers, video-on-demand promotions, or other information that might be of interest to the viewer. For example, the additional information can be displayed in background region 204 of program guide 202 (Fig. 2). This additional information may be pre-formatted for display in the background region of the program guide or may be formatted by the client device to fit in the background region. The additional information may be received from a headend or other data source. Further details regarding this request for additional information are provided below with respect to Fig. 4.

The program guide application then generates a program guide containing a background portion and a scrolling program schedule portion (block 308). At this point, the client device is operating in a non-interactive scrolling mode. The scrolling program schedule portion of the program guide omits navigation arrows and other navigation controls in the program guide. In this non-interactive scrolling mode, the program guide may also omit the program description. The background portion displays additional information, such as advertisements and movie trailers. The scrolling program schedule portion is the grid that displays the program schedule information for a particular range of time and a particular range of channels. In an alternate embodiment, the program guide application program generates a program guide that contains a background portion and an interactive program schedule portion. In this embodiment, the interactive program schedule portion allows a user to navigate the program guide by manipulating buttons on a remote control device or by entering commands in another manner.

Procedure 300 continues by determining whether a program guide command was received (block 310). A program guide command is any command or function associated with the program guide, such as a navigation command or a request to display a program guide. A program guide command can be entered via a remote control device, via buttons on a client device, or via any other device or system. For example, activating an arrow button or a "Guide" button on a remote control represents on way to enter a program guide command. However, activating a volume button or other button unrelated to the program guide is not considered to be a program guide command. If a program guide command has not been received at block 310, the procedure continues scrolling the program schedule portion of the program guide (block 312). The procedure continues to scroll the program schedule portion of the program guide until a program guide command is received.

Upon receipt of a program guide command, procedure 300 branches to block 314, which changes operation of the program schedule portion of the program guide from the previous scrolling mode to an interactive mode. At this point, the client device is operating in an interactive mode. The interactive mode allows the viewer to navigate through the program guide using various navigation buttons or other commands. After changing to the interactive mode, the procedure determines whether a command timeout has occurred (block 316). A command timeout occurs when a program guide command has not been received for a particular period of time (e.g., a timeout period). The period of time may be any length of time from a few seconds to a few minutes. If a command timeout has not occurred, the operation of the client device remains in the interactive mode. However, if a command timeout occurs, the operating mode of the client device changes such that the program schedule portion of the program guide changes to the scrolling mode (block 318) and the procedure returns to block 310, where the program schedule portion of the program guide is scrolled until another program guide command is received.

Thus, the client device displays a scrolling program guide until a program guide command is received. The client device then changes to an interactive mode and allows the viewer to navigate the program guide by entering one or more navigation commands. If the viewer stops entering program guide commands (such as navigation commands) for a particular period of time, the client device changes back to displaying a scrolling program guide until another program guide command is received. If the viewer selects a particular program, the program guide is removed from the display device and the program selected by the viewer is displayed on the display device.

In this embodiment, the non-interactive scrolling mode is the default mode of operation for the program guide. In other embodiments, the interactive mode may be the default mode. In those other embodiments, the viewer may enter a specific command to activate the scrolling operation of the program guide. The scrolling operation may continue for a particular period of time or may continue until the viewer enters a program guide command or otherwise requests that the client device change to the interactive mode.

Fig. 4 is a flow diagram illustrating an embodiment of a procedure 400 for obtaining additional information for display in a program guide. This additional information is displayed, for example, in the background region 204 shown in Fig. 2. This additional information may include advertisements, movie previews, video-on-demand promotions, and the like. Thus, the additional information represents an opportunity for the service provider (e.g., cable service provider, satellite service provider, or other provider) to generate additional revenue from the cost of the advertisement or from products or services purchased by the viewer as a result of the additional information. Initially, the program guide application identifies information regarding the viewer (block 402). This information may include viewer preferences, program reminders set by the viewer, previously recorded programs, programs scheduled to be recorded, time of day viewing occurs, channels viewed, previously purchased programs, premium channels to which the viewer subscribes, programs previously watched by the viewer, and whether the viewer has ever used video-on-demand or pay-per-view. For example, if the viewer has never used video-on-demand or pay-per-view, a tutorial can be displayed for the viewer.

As procedure 400 continues, the program guide application identifies the current date and time (block 404). The program guide application then requests additional information for display in the background region of the program guide (block 406). This information may be requested from any data source, such as a headend system, a video server, or other data server. The information requested may vary depending on the capabilities of the client device requesting the information. The client device attempts to avoid advertising or promoting a service that is not supported by the client device. For example, if the client device is capable of accessing video-on-demand services, the requested information may include video-on-demand promotions. However, if the client device is not capable of accessing video-on-demand services, the requested information may include other advertisements or information. Additionally, if the client device contains a disk drive, promotional information may be stored on the disk drive for present or future playback.

Next, the program guide application receives the requested information (block 408). For example, the requested information may be received via a broadcast channel or may be provided to the client device via a network or other data communication link. In one embodiment, the requested information is provided to the client device via a particular broadcast channel. In another embodiment, the requested information is streamed to the client device from a video server via one or more networks, such as a local area network (LAN) or the Internet. In other embodiments, the requested information is retrieved by the client device from one or more data sources via one or more data communication links.

Finally, the program guide application displays the requested information in the background region of the program guide (block 410). The requested information is displayed in the background region regardless of whether the client device is operating in the non-interactive scrolling mode or the interactive mode. The information displayed in the background region may be of particular interest to the viewer since the information was selected based on knowledge of the viewer and/or knowledge of the viewer's viewing habits. Thus, advertisements may be more effective because they are targeted to the viewer and more likely to be of interest to the viewer than general advertisements that are broadcast to all users.

As discussed above, the information displayed in the background region of the program guide may differ from one client device to another based on viewer preferences and the like. Additionally, the programs displayed in the program schedule portion of the program guide may differ from one client device to another based on viewer preferences, previously viewed programs, and/or other parameters. Since the program guide is generated locally on the client device, different information can be displayed in different program guides without requiring additional bandwidth.

In a particular embodiment, a viewer's viewing history is stored at the headend (or any other location). A recommendation system at the headend is used to augment the program guide by sending program listings and other information to various client devices that is likely of interest to users of the client devices. These recommendations can be promoted passively in the non-interactive scrolling program guide with instructions teaching the viewer how to take action and activate content that is being recommended. The recommendations can also be promoted in the interactive program guide with similar instructions.

Operation of the non-interactive scrolling program guide may be configured at the headend by generating a configuration file that is sent to all client devices. This configuration file may include information such as:
a scrolling interval, which defines the time it takes to scroll through program listings passively;
information (such as video data or information received via a broadcast channel) to display in the background region of the program guide;
a channel number associated with the non-interactive scrolling program guide;
call letters associated with the above channel (e.g., "WHATSON");
a name associated with the above channel (e.g., "What's On");
a description of the above channel;
the number of channels displayed in the program guide at a particular time; and
content describing layout and view of the user experience.

The user experience identifies information regarding items displayed to the user, such as positions, colors, etc. of the various components. Thus, the items displayed to the user can be modified (e.g., by the user or a content provider) by changing the information sent to the client device regarding the user experience.

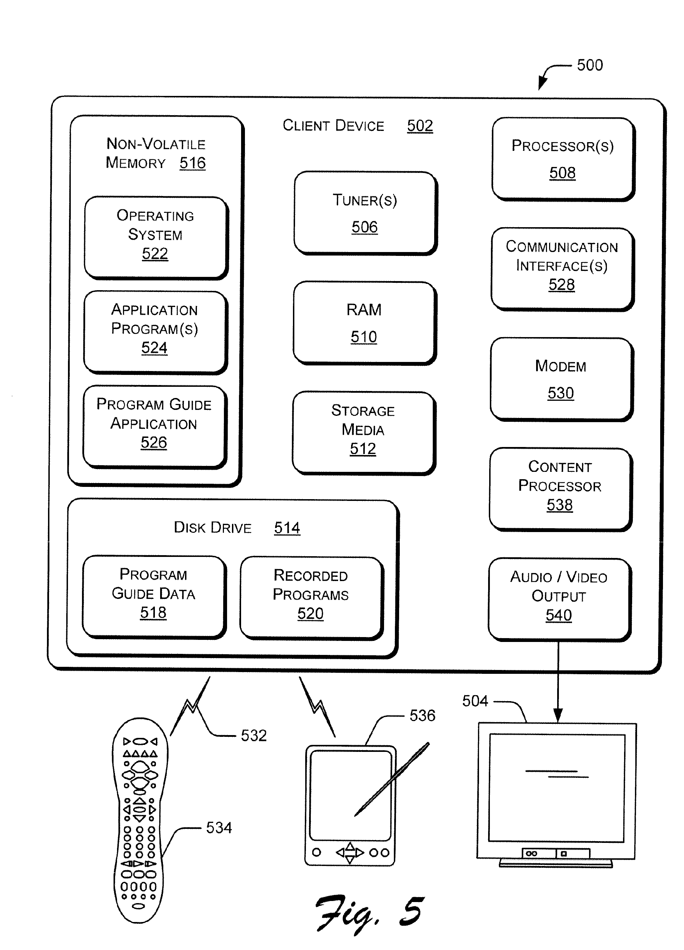

Fig. 5 illustrates a television-based system 500 that includes an example client device 502, which includes components to implement a program guide. System 500 also includes a display device 504 to display the program guide. Client device 502 can be implemented as a set-top box, a satellite receiver, a TV recorder with a hard disk, a digital video recorder (DVR) and playback system, a game console, an information appliance, and as any number of similar embodiments.

Client device 502 includes one or more tuners 506 which are representative of one or more in-band tuners that tune to various frequencies or channels to receive television signals, as well as an out-of-band tuner that tunes to the broadcast channel over which program data is broadcast to client device 502. Client device 502 also includes one or more processors 508 (e.g., any of microprocessors, controllers, and the like) which process various instructions to control the operation of client device 502 and to communicate with other electronic and computing devices.

Client device 502 can be implemented with one or more memory components, examples of which include a random access memory (RAM) 510, mass storage media 512, a disk drive 514, and a non-volatile memory 516 (e.g., ROM, Flash, EPROM, EEPROM, etc.). Disk drive 514 can include any type of magnetic or optical storage device, such as a hard disk drive, a magnetic tape, a rewriteable compact disc, a DVD, and the like. The one or more memory components store various information and/or data such as received content, program guide data 518, recorded programs 520, configuration information for client device 502, and/or graphical user interface information. Alternative implementations of client device 502 can include a range of processing and memory capabilities, and may include any number of differing memory components than those illustrated in Fig. 5. For example, full-resource clients can be implemented with substantial memory and processing resources, whereas low-resource clients may have limited processing and memory capabilities.

An operating system 522 and one or more application programs 524 can be stored in non-volatile memory 516 and executed on processor(s) 508 to provide a runtime environment. A runtime environment facilitates extensibility of client device 502 by allowing various interfaces to be defined that, in turn, allow application programs 524 to interact with client device 502. The application programs 524 can include a browser to browse the Web (e.g., "World Wide Web"), an email program to facilitate electronic mail, and any number of other application programs.

A program guide application 526 that executes on processor(s) 508 is also stored in non-volatile memory 516 and is implemented to process the program guide data 518 and generate a non-interactive scrolling program guide or an interactive program guide for display. Using program guide application 526, the viewer can look at schedules of current and future programming, set reminders for upcoming programs, and/or enter instructions to record one or more programs.

Client device 502 further includes one or more communication interfaces 528 and a PSTN, DSL, cable, or other type of modem 530. A communication interface 528 can be implemented as a serial and/or parallel interface, as a wireless interface, and/or as any other type of network interface. A wireless interface enables client device 502 to receive control input commands 532 and other information from a user-operated input device, such as from a remote control device 534 or from another infrared (IR), 802.11, Bluetooth, or similar RF input device. Input devices can include a wireless keyboard or another handheld input device 536 such as a personal digital assistant (PDA), handheld computer, wireless phone, or the like. A network interface and a serial and/or parallel interface enables client device 502 to interact and communicate with other electronic and computing devices via various communication links. Modem 530 facilitates client device 502 communication with other electronic and computing devices via a conventional telephone line, a DSL connection, cable, and/or other type of connection.

Client device 502 also includes a content processor 538 which can include a video decoder and/or additional processors to receive, process, and decode broadcast video signals and program data, such as NTSC, PAL, SECAM, or other television system analog video signals, as well as DVB, ATSC, or other television system digital video signals. For example, content processor 538 can include an MPEG-2 or MPEG-4 (Moving Pictures Experts Group) decoder that decodes MPEG-encoded video content and/or image data. The systems described herein can be implemented for any type of video encoding format as well as for data and/or content streams that are not encoded.

Typically, video content and program data includes video data and corresponding audio data. Content processor 538 generates video and/or display content that is formatted for display on display device 504, and generates decoded audio data that is formatted for presentation by a presentation device, such as one or more speakers (not shown) in display device 504. Content processor 538 can include a display controller (not shown) that processes the video and/or display content to display corresponding images on display device 504. A display controller can include a graphics processor, microcontroller, integrated circuit, and/or similar video processing component to process the images.

Client device 502 also includes an audio and/or video output 540 that provides the audio, video, and/or display signals to television 504 or to other devices that process and/or display, or otherwise render, the audio and video data. Video signals and audio signals can be communicated from client device 502 to television 504 via an RF (radio frequency) link, S-video link, composite video link, component video link, or other similar communication link.

Although shown separately, some of the components of client device 502 may be implemented in an application specific integrated circuit (ASIC). Additionally, a system bus (not shown) typically connects the various components within client device 502. A system bus can be implemented as one or more of any of several types of bus structures, including a memory bus or memory controller, a peripheral bus, an accelerated graphics port, or a local bus using any of a variety of bus architectures. By way of example, such architectures can include an Industry Standard Architecture (ISA) bus, a Micro Channel Architecture (MCA) bus, an Enhanced ISA (EISA) bus, a Video Electronics Standards Association (VESA) local bus, and a Peripheral Component Interconnects (PCI) bus also known as a Mezzanine bus.

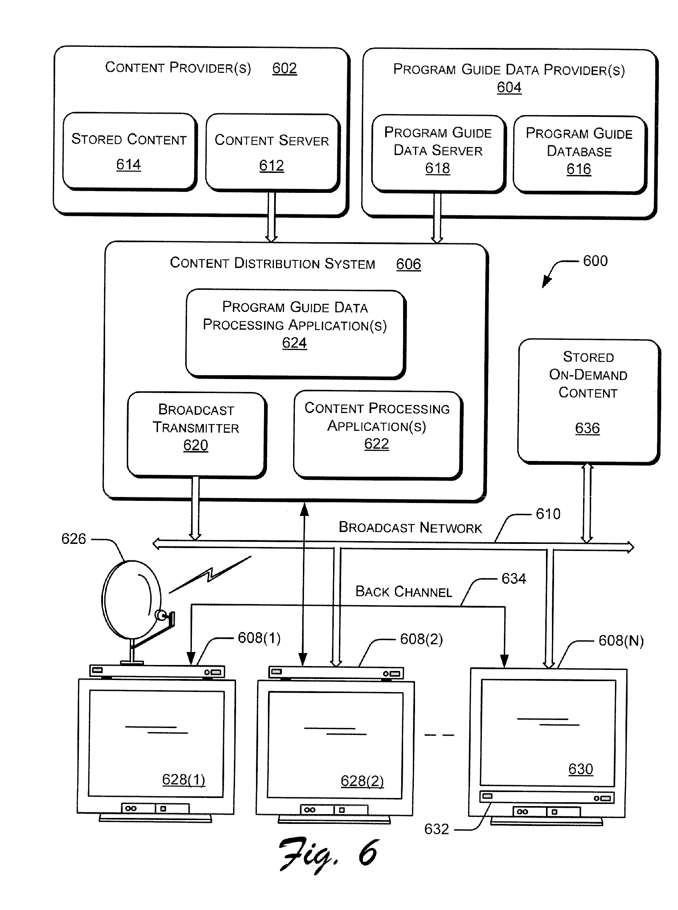

Fig. 6 illustrates an example system architecture 600 in which a program guide can be implemented. System 600 facilitates distribution of content to multiple viewers. The system 600 includes one or more content providers 602, one or more program guide data providers 604, a content distribution system 606, and multiple client devices 608(1), 608(2), ..., 608(N) coupled to the content distribution system 606 via a broadcast network 610.

A content provider 602 can be implemented as a satellite operator, a network television operator, a cable operator, and the like. A content provider 602 includes a content server 612 to control distribution of stored content 614, such as movies, television programs, commercials, music, advertisements, and similar audio, video, and/or image content from content provider 602 to the content distribution system 606. Additionally, content server 612 controls distribution of live content (e.g., content that was not previously stored, such as live feeds) and/or content stored at other locations to the content distribution system 606.

A program guide data provider 604 includes a program guide database 616 and a program guide data server 618. The program guide database 616 stores electronic files of program guide data which is used to generate a program guide. Program guide data can include a program title, program broadcast day(s) to identify which days of the week the program will be broadcast, program start times(s) to identify a time that the program will be broadcast on the particular day or days of the week, and a program category. A program category describes the genre of a program and categorizes it as a particular program type. For example, a program can be categorized as a movie, a comedy, a sporting event, a news program, a sitcom, a talk show, or as any number of other category descriptions. Program guide data can also include program ratings, characters, descriptions, actor names, station identifiers, channel identifiers, other schedule information, and so on. Additionally, program guide data may include video on-demand content information, such as movie schedules, as well as application information, such as for interactive games, and other programming information that may be of interest to a viewer.

The program guide data server 618 processes the program guide data prior to distribution to generate a published version of the program guide data which can contain programming information for all broadcast channels and on-demand content listings for one or more days. The processing may involve any number of techniques to reduce, modify, or enhance the program data such as data compression, format modification, and the like. The program guide data server 618 controls distribution of the published version of the program guide data from a program guide data provider 604 to the content distribution system 606 using, for example, a file transfer protocol (FTP) over a TCP/IP network (e.g., Internet or Intranet). Further, the published version of the program guide data can be transmitted from program data provider 604 via a satellite and the content distribution system 606 directly to a client device 608.

Content distribution system 606 is representative of a headend service and/or program data center that provides various content to multiple subscribers (e.g., client devices 608). Each content distribution system 606 may receive a different version of the program guide data that takes into account different programming preferences and lineups. The program guide data server 618 can create different versions of the program guide data that includes those channels of relevance to respective headend services, and the content distribution system 606 transmits the program guide data to the multiple client devices 608. In one implementation, for example, content distribution system 606 utilizes a carousel file system to repeatedly broadcast the program guide data over an out-of-band (OOB) channel to the client devices 608. Alternatively, the multiple client devices 608 can receive standard, or uniform, program guide data and individually determine which program guide data to display based on the associated headend service.

Content distribution system 606 includes a broadcast transmitter 620, one or more content processing applications 622, and one or more program guide data processing applications 624. Broadcast transmitter 620 broadcasts signals, such as cable television signals, across broadcast network 610. Broadcast network 610 can include a cable television network, RF, microwave, satellite, and/or data network, such as the Internet, and may also include wired or wireless transmission media using any broadcast format or broadcast protocol. Additionally, broadcast network 610 can be any type of network, using any type of network topology and any network communication protocol, and can be represented or otherwise implemented as a combination of two or more networks.

A content processing application 622 processes the content received from a content provider 602 prior to transmitting the content across broadcast network 610. Similarly, a program guide data processing application 624 processes the program guide data received from a program guide data provider 604 prior to transmitting the program guide data across broadcast network 610. A particular content processing application 622 may encode, or otherwise process, the received content into a format that is understood by the multiple client devices 608 which are coupled to broadcast network 610. Although Fig. 6 shows a single content provider 602, a single program guide data provider 604, and a single content distribution system 606, exemplary system 600 can include any number of content providers and/or program guide data providers coupled to any number of content distribution systems.

Client devices 608 can be implemented in a number of ways. For example, a client device 608(1) receives broadcast content from a satellite-based transmitter via a satellite dish 626. Client device 608(1) is also referred to as a set-top box or a satellite receiving device. Client device 608(1) is coupled to a television 628(1) for presenting the content received by the client device (e.g., audio data, video data, and image data), as well as a graphical user interface. A particular client device 608 can be coupled to any number of televisions 628 and/or similar devices that can be implemented to display or otherwise render content. Similarly, any number of client devices 608 can be coupled to a single television 628.

Client device 608(2) is also coupled to receive broadcast content from broadcast network 610 and provide the received content to associated television 628(2). Client device 608(N) is an example of a combination television 630 and integrated set-top box 632. In this example, the various components and functionality of the set-top box are integrated into the television, rather than using two separate devices. The set-top box integrated into the television can receive broadcast signals via a satellite dish (similar to satellite dish 626) and/or via broadcast network 610. In alternate implementations, client devices 608 may receive broadcast signals via the Internet or any other broadcast medium, such as back channel 634 which can be implemented as a Internet Protocol (IP) connection or as other protocol connections using a modem connection and conventional telephone line, for example. Further, back channel 634 provides an alternate communication link between each of the client devices 608, and between the client devices 608 and the content distribution system 606.

The exemplary system 600 also includes stored on-demand content 636, such as video-on-demand movie content. The stored on-demand content 636 can be viewed with a television 628 via a client device 608 through an onscreen movie guide, for example, and a viewer can enter instructions to stream a particular movie, or other stored content, to a corresponding client device 608.

Although the description above uses language that is specific to structural features and/or methodological acts, it is to be understood that the invention defined in the appended claims is not limited to the specific features or acts described. Rather, the specific features and acts are disclosed as exemplary forms of implementing the invention.

## Claims

1. A method comprising:
receiving a request to display a program guide, wherein the request is received by a client device;
identifying program schedule information;
the client device generating a scrolling program guide; and
communicating the scrolling program guide to a display device.

2. A method as recited in claim 1 further comprising pausing the scrolling of the program guide in response to a user input.

3. A method as recited in claim 1 wherein receiving a request to display a program guide is generated in response to activation of a guide button associated with the client device.

4. A method as recited in claim 1 wherein receiving a request to display a program guide is generated in response to tuning the client device to a channel associated with the program guide.

5. A method as recited in claim 1 wherein receiving a request to display a program guide is generated in response to tuning the client device to a virtual channel.

6. A method as recited in claim 1 wherein the program guide includes:
program schedule information; and
additional information targeted to a user of the client device.

7. A method as recited in claim 6 wherein the additional information is an advertisement.

8. A method as recited in claim 6 wherein the additional information is a video-on-demand promotion.

9. A method as recited in claim 1 wherein the program guide includes:
program schedule information; and
background information received via a broadcast signal.

10. A method as recited in claim 1 further comprising receiving a configuration file that defines operating parameters for the client device.

11. A method as recited in claim 1 wherein the client device is a set top box.

12. One or more computer-readable memories containing a computer program that is executable by a processor to perform the method recited in claim 1.

13. A method comprising:
receiving a request to display a program guide;
identifying program schedule information;
generating a program guide, wherein the program guide displays program schedule information in a scrolling manner;
detecting a user input; and
if the user input is related to the program guide, changing operation of the program guide to display program schedule information in an interactive manner.

14. A method as recited in claim 13 further comprising changing operation of the program guide to display program information in a scrolling manner after a predetermined time period without user input.

15. A method as recited in claim 13 wherein a portion of the program guide includes an advertisement associated with a viewer of the program guide.

16. A method as recited in claim 13 wherein a portion of the program guide includes a video preview associated with a viewer of the program guide.

17. A method as recited in claim 13 wherein the program guide is generated by a set top box.

18. A method as recited in claim 13 wherein a first portion of the program guide is generated by a set top box and a second portion of the program guide is received via a broadcast signal.

19. A method as recited in claim 13 wherein the program guide includes:
program schedule information generated by a set top box; and
additional information received via a broadcast signal.

20. A method as recited in claim 19 further comprising requesting the additional information based on data associated with the user of the set top box.

21. One or more computer-readable memories containing a computer program that is executable by a processor to perform the method recited in claim 13.

22. One or more computer-readable media having stored thereon a computer program that, when executed by one or more processors, causes the one or more processors to:
identify program schedule information;
identify information regarding a viewer;
select promotional content of interest to the viewer based on the information regarding the viewer; and
generate a scrolling program guide, wherein the scrolling program guide includes a first portion containing program schedule information and a second portion containing promotional content of interest to the viewer.

23. One or more computer-readable media as recited in claim 22 wherein the one or more processors further pause scrolling of the program guide in response to viewer input.

24. One or more computer-readable media as recited in claim 22 wherein the one or more processors further change an operating mode of the program guide to an interactive mode in response to viewer input.

25. An apparatus comprising:
a memory device;
a processor coupled to the memory device, wherein the processor is configured to receive program schedule information and to generate a scrolling program guide containing the program schedule information, and wherein the processor is further configured to communicate the scrolling program guide to a display device.

26. An apparatus as recited in claim 25 wherein the program schedule information is stored in the memory device.

27. An apparatus as recited in claim 25 wherein the program guide further contains additional information received via a broadcast channel.

28. An apparatus as recited in claim 25 wherein the processor is further configured to generate an interactive program guide containing the program schedule information in response to a user input.

29. An apparatus as recited in claim 25 wherein the apparatus is a set top box.
